Europäisches Patentamt

European Patent Office

Office européen des brevets

(11) Publication number: **0 051 336**
**B1**

# (12) EUROPEAN PATENT SPECIFICATION

(45) Date of publication of patent specification: **10.04.85**

(21) Application number: **81201196.3**

(22) Date of filing: **28.10.81**

(51) Int. Cl.⁴: **C 08 L 69/00,** C 08 L 55/02,
C 08 L 51/00, C 08 F 285/00

(54) **Polymer composition.**

(30) Priority: **31.10.80 NL 8005972**

(43) Date of publication of application:
**12.05.82 Bulletin 82/19**

(45) Publication of the grant of the patent:
**10.04.85 Bulletin 85/15**

(84) Designated Contracting States:
**AT BE CH DE FR GB IT LI NL SE**

(56) References cited:
**FR-A-2 246 595**
**FR-A-2 249 123**
**FR-A-2 404 649**
**US-A-3 852 393**

(73) Proprietor: **STAMICARBON B.V.**
**Postbus 10**
**NL-6160 MC Geleen (NL)**

(72) Inventor: **van Asperen, Pieter Jan**
**Boerhavestraat 21**
**NL-6164 Geleen (NL)**

(74) Representative: **Hatzmann, Marinus Jan et al**
**OCTROOIBUREAU DSM P.O.Box 9**
**NL-6160 MA Geleen (NL)**

The file contains technical information
submitted after the application was filed and
not included in this specification

Courier Press, Leamington Spa, England.

**0 051 336**

**Description**

The invention relates to a polymer composition based on a polycarbonate and a graft copolymer of a vinylaromatic compound and an unsaturated nitrile compound.

Such a polymer composition is known from, among other things, the German patent specifications 1.170.141 and 1.810.993 and from the Netherlands patent applications 7316731 and 7316732 laid open to public inspection.

The German patent specification 1.170.141 describes mixtures of a polycarbonate and a polymer obtained by the graft polymerization of a vinylaromatic compound and an unsaturated nitrile compound in the presence of polybutadiene.

According to the German patent specification 1.810.993, the heat resistance, the notch impact resistance and the hardness of such mixtures can be improved by mixing into them a copolymer containing at least 50% by weight of α-methylstyrene.

The French patent application 2 404 649 describes a process for the preparation of ABS wherein in a first stage an emulsion and in a second stage a suspension polymerization takes place.

The French patent application 2 249 123 is concerned with blends of ABS and a halogen-containing polycarbonate. The ABS may be prepared by polymerizing first in bulk to a rather low degree of conversion, then converting the solution to an aqueous suspension and polymerizing to a high conversion.

The French patent application 2 246 595 claims blends of halogenated polycarbonate, ABS and an antimony compound.

US—PS—3,852,393 concerns blends of polycarbonate and an ABS prepared by bulk-suspension polymerization.

According to the Netherlands patent application 7316731, the strength of the fusion seams of mixtures according to these patent specifications can be improved by applying a graft copolymer with 40 to 80% by weight of rubber, while the average particle size of the graft copolymer is between 0.2 and 5 μm.

The Netherlands patent application 7316732 shows that the same purpose can be reached by starting from a graft copolymer with an average particle size of between 0.05 and 0.19 μm.

However, the problem of the aforementioned polymer compositions is that, with a comparable flow behaviour, the stiffness, the notch impact resistance and the dimensional stability under heat of the objects made from these polymer conditions are relatively low.

The purpose of the invention is to provide a polymer composition which does not show this problem.

The invention is therefore characterized in that the polymer composition comprises:

a. one or more polycarbonates, and

b. a graft copolymer obtained by polymerizing, in a first emulsion polymerization step, a mixing of 10—30% by weight of acrylonitrile, 10—75% by weight of styrene and 0—70% by weight of α-methylstyrene in the presence of a latex of a rubbery polymer and by polymerizing, in a second emulsion polymerization step, in the presence of the latex produced in the first step, a mixture of 10—30% by weight of acrylonitrile, 0—50% by weight of styrene and 40—90% by weight of α-methylstyrene.

The graft polymer preferably contains 10—40% by weight of rubber. The limits within which the quantities of polycarbonate and graft copolymer can be varied are very wide. Generally they are between 5 and 95% by weight of polycarbonate and 5—95% by weight of graft copolymer.

The specific choice is determined mainly by the standards imposed upon the final product.

Preference is given to polymer compositions consisting of 40—75% by weight of polycarbonate and 25—60% by weight of graft copolymer, because within these limits an optimum balance of the various properties of importance, such as stiffness, dimensional stability under heat, hardness, impact resistance and flow behaviour, is obtained.

Surprisingly it has been found that in applying the specific graft copolymer according to the invention a definite improvement of the stiffness, heat stability, impact resistance and instrumented flat-headed falling dart impact energy occurs.

In those cases in which a reduced heat stability can be accepted it may be an advantage to incorporate in the polymer composition a second graft copolymer obtained by polymerizing 75—90 parts by weight of a mixture of 60—90% by weight of styrene and 10—40% by weight of acrylonitrile in the presence of 10—25 parts by weight of rubber. The quantity of this second graft copolymer may be 10—50% by weight of the total quantity of graft copolymer in the polymer composition.

The advantage of applying the second graft copolymer is that, with a slight decrease of the dimensional stability under heat, there will be a definite improvement of the flow behaviour.

In principle all thermoplastic polycarbonates are suitable for the moulding compounds of the invention. Polycarbonates are known in themselves and can be obtained by conversion of dihydroxy or polyhydroxy compounds with phosgene or diesters of carbonic acid.

Particularly suitable dihydroxy compounds are dihydroxydiarylalkanes, including those compounds containing alkyl groups or chlorine or bromine atoms at the ortho position in respect of the hydroxyl group.

The following compounds are dihydroxydiarylalkanes which are to be preferred: 4,4'-dihydroxy-2,2-diphenylpropane (bisphenol A), tetramethylbisphenol A, tetrachlorobisphenol A, tetrabromobisphenol A and bis-(4-hydroxyphenyl) p-diisopropylbenzene. In addition to the polycarbonates, which can be prepared only from dihydroxydiarylalkanes, it is also possible to apply branched polycarbonates. For the preparation

2

of polycarbonates of this grade a part of the dihydroxy compound, for instance 0.2—2 moles %, is replaced by a polyhydroxy compound.

Examples of suitable polyhydroxy compounds are 1,4-bis(4',4,2'-dihydroxytriphenylmethyl)benzene, phloroglucinol, 4,6-dimethyl 2,4,6-tri-(4-hydroxyphenyl) 2-heptane, 4,6-dimethyl 2,4,6-tri-(4-hydroxyphenyl)heptane, 1,3,5-tri-(4-hydroxyphenyl) benzene, 1,1,1-tri-(4-hydroxyphenyl)ethane and 2,2-bis-[4,4-(4,4'-dihydroxydiphenyl)cyclohexyl]propane.

Polycarbonates of the aforementioned grades are described in, for instance, in the United States patent specifications 3,028,365; 2,999,835; 3,148,172; 3,271,368; 2,970,137; 2,991,273; 3,271,367; 3,280,078; 3,014,891 and 2,999,846.

The polycarbonates which are to be preferred have molecular weights of 10,000—60,000, more specifically of 20,000—40,000.

Preferably the chosen polymer composition is such that the rubber content therein is between 5 and 30% by weight, more specifically between 10 and 20% by weight. Within these limits of the rubber content a polymer composition is obtained with a good impact resistance combined with a good processability.

The preparation of the graft copolymer is carried out in emulsion. With the polymerization in aqueous emulsion the necessary, usual auxiliaries for this purpose, such as emulsifiers, lye, salts, soaps, initiators, such as peroxides, and chain length regulators, must be applied.

Suitable chain length regulators are organosulphur compounds, such as the much used mercaptans, as well as the dialkyldixanthogens, diarylsulphides, mercaptothiazoles, tetra-alkylthiurammono- and disulphides, separately or mixed together, as well as hydroxyl compounds, such as terpinolenes. Moreover, the dimer of α-methylstyrene or an α-alkene with relatively long chain can be used as well.

The commercially most usual chain length regulators are particularly the mercapto compounds, and of these the hydrocarbylmercaptans with 8—20 carbon atoms per molecule are now much used. More specifically preference is given to mercaptans with a tertiary alkyl group.

The quantity of organosulphur compound may vary within wide limits, depending on the mixture chosen, the specific compound, polymerization temperature, emulsifier and other variables relating to the recipe. A good result can be achieved by using 0.01—5 parts by weight (per 100 parts by weight of monomer) of organosulphur compound, in which use preference is given to 0.05—2 parts. Suitable organosulphur compounds comprise n-octylmercaptan, n-dodecylmercaptan, tertiary dodecylmercaptan, tertiary nonylmercaptan, tertiary hexadecylmercaptan, tertiary octadecylmercaptan, tertiary eicosyl-mercaptan, secondary octylmercaptan, secondary tridecylmercaptan, cyclododecylmercaptan, cyclododecadienylmercaptan, arylmercaptan, such as 1-naphthalenethiol, bis(tetra-methylthiouramdi-sulphide) and 2-mercaptobenzathiazole. Mixtures of these compounds can also be used.

As emulsifier widely different compounds can be used, such as disproportionated rosin soap, fatty acid soap, arylsulphonates, alkylarylsulphonates and other surface-active compounds and mixtures thereof. Non-ionogenic emulsifiers, such as polyethers and polyols, can also be used. The quantities of the emulsifiers used depend on the grade, as well as on the reaction parameters and the concentrations of polymerizable monomer in the emulsion polymerization system.

For the emulsion polymerization process suitable compounds supplying free radicals are organic or inorganic peroxides, hydroperoxides, azo compounds, as well as redox initiator systems. These compounds can be added at the beginning of the polymerization process. It is possible also to add these compounds partly at the beginning and partly in the course of the polymerization process.

Preferably alkali- or ammoniumpersalts and/or redox systems are chosen as initiators. Mention must be made in particular of potassiumpersulphate, ammoniumpersulphate and sodiumpersulphate. Examples of suitable redox systems are persalts (for instance perchlorates or persulphates), tertiary butylhydroperoxide, cumenehydroperoxide, diisopropylbenzenehydroperoxide and methylcyclohexylhydroperoxide, combined with reductants based on acids containing sulphur in a low valency condition, such as sodiumformaldehydesulphoxylate, bisulphide, pyrosulphide, or with organic bases, such as tri-ethanolamine, with dextrose, sodiumpyrophosphate and mercaptans or combinations thereof, optionally in combination with metal salts, such as ferrous sulphate. These initiators or initiator systems can be fed in one single dose, by steps or even gradually.

The initiators or initiator systems used in each of the steps of the preparation of the graft copolymer may be the same or different. It is quite possible to use a persulfate in one of the steps and a hydroperoxide in the other.

As rubber for the preparation of the graft copolymer all rubbers are in principle suitable.

Preference is given to rubber based on butadiene, such as polybutadiene and butadiene-styrene rubber. In order to obtain a polymer composition with a good impact resistance, a rubber latex with a weight-average particle size ($d_{50}$, determined with electron microscope) of between 0.05 and 0.70 μm is preferably started from.

The process according to which this rubber latex is prepared is preferably so controlled that highly cross-linked products are obtained. The gel content should preferably be higher than 70% by weight (determined in methylethylketone or toluene). With a high butadiene content, this degree of cross-linking can be obtained by polymerizing to high degrees of conversion or by applying cross-linking agents, i.e. polyfunctional monomers, such as divinylbenzene or ethyleneglycoldimethacrylate.

In those cases in which the rubbers are prepared by emulsion polymerization the emulsifiers, activators and polymerization auxiliaries normally used for the preparation of the graft copolymers can be applied. Before the grafting reaction the rubber latex must be degassed in order to suppress undesired cross-linking reactions initiated by non-converted monomer.

Preference is given to the use of polybutadiene homopolymers or butadiene copolymers with a butadiene content of more than 60% by weight. If other dienes, for instance isoprene, or the lower alkylesters of acrylic acid, are used as comonomers, the butadiene content of the rubber can be reduced to 30% by weight without any disadvantage occurring with respect to the properties of the polymer composition. In principle it is also possible to prepare the graft polymer according to the invention from saturated rubbers, for instance from ethylenevinylacetate copolymers with a vinylacetate content lower than 50% or from ethylene-propylene-diene terpolymers (these dienes are not conjugated; examples are: 1,4-hexadiene, ethylidene norbornene, dicyclopentadiene), as well as acrylate rubber or chloroprene rubber. Mixtures of two or more rubbers can be applied as well.

The polymer composition generally contains the usual additives, such as antioxidants, pigments, processing aids, fillers, antistatics, flame retardants and the like. At the same time yet another polymer may be incorporated in the composition, such as polyphenylene oxide, polysulphone and the like.

Finally, the invention also relates to an object wholly or partly made from the polymer composition described above.

The polymer composition according to the invention can be used to advantage in the automotive industry and for domestic appliances.

The invention will now be elucidated by means of the following examples.

The polycarbonate

In a solution of 20 parts by weight of sodium hydroxide in 250 parts of water are suspended 57 parts by weight of 2,2-(4,4'-dihydroxy-diphenyl)-propane. A clear solution is formed. After the addition of 22 parts by weight of a mixture of xylene isomerides and 0.0026 parts by weight of phenol, 6 parts by weight of phosgene are introduced into the solution at 30°C with stirring and cooling. The mixture is then simultaneously treated with 31.5 parts by weight of phosgene and 21 parts by weight of sodium hydroxyde in 62 parts of water in the course of $1\frac{1}{2}$ hours. The mixture is subsequently stirred at 80°C for 1 hour. The colourless granular product obtained is filtered off with suction and washed until neutral. The colourless product obtained melts at 225—227°C into a highly viscous state. The K-value is 77, corresponding to a relative viscosity of 1.775, measured in m-cresol at 25°C.

Comparative Examples 1 up to and including 26 and Examples I up to and including XVIII

Starting from a polycarbonate based on bisphenol A and a dihydroxydiarylalkene with a melt index of 16 according to ISO R 1133 and three ABS grades, a number of mixtures were made. The composition of these mixtures is shown in Table 1.

The preparation of the blends listed in Table 1 was as follows: all components, which were in powder form, were tumbled for 20 minutes and thereafter extruded to granulate. This granulate was further processed under the conditions given in Table 2.

4

TABLE 1

| Component | Material | 1 | 2 | 3* | 4 | 5 | 6* | 7 | 8 | 9* | 10* | 11* | 12* | 13* | 14* |
|---|---|---|---|---|---|---|---|---|---|---|---|---|---|---|---|
| Polycarbonate | (pbw) | 0.25 | 0.25 | 0.25 | 0.50 | 0.50 | 0.50 | 0.75 | 0.75 | 0.75 | 0.1 | 0.2 | 0.3 | 0.5 | 0.75 |
| ABS | A (pbw) | 0.75 | — | — | 0.50 | — | — | 0.25 | — | — | — | — | — | — | — |
| ABS | B (pbw) | — | 0.75 | — | — | 0.50 | — | — | 0.25 | — | — | — | — | — | — |
| ABS | C (pbw) | — | — | 0.75 | — | — | 0.50 | — | — | 0.25 | 0.9 | 0.8 | 0.7 | 0.5 | 0.25 |

*According to the invention

**0 051 336**

The ABS grades shown in this table are the following:

ABS-A: A graft copolymer obtained by polymerizing 80 parts by weight of styrene and acrylonitrile (weight ratio 72/28) in the presence of 20 parts by weight of polybutadiene.

ABS-B: A graft copolymer obtained by polymerizing 65 parts by weight of styrene and acrylonitrile (weight ration 70/30) in the presence of 35 parts by weight of polybutadiene.

ABS-C: A graft copolymer obtained by polymerizing, in a first step, in the presence of 15 parts by weight of polybutadiene (in latex form), 35 parts by weight of a mixture of styrene, acrylonitrile and α-methylstyrene in a weight ratio of 10/25/65 and by polymerizing, in a second step, in the presence of the latex produced in the first step, 35 parts by weight of a mixture of α-methylstyrene and acrylonitrile in a weight ratio of 75/25.

The processing conditions of the various materials are shown in Table 2.

TABLE 2

| Material | ABS A and B | C | Poly-carbonate | ABS-PC blends |
|---|---|---|---|---|
| Pre dry time | 2 hours | 2 hours | 4 hours | 2 hours |
| Pre dry temperature °C | 80 | 80 | 120 | 100 |
| Processing temperature °C | 230 | 250 | 280 | 250 |
| Mould temperature °C | 50 | 50 | 90 | 80 |

For testing the properties of the materials the following test methods have been applied.

Flexure test: ASTM D 790.

Impact resistance: Izod (notched) parallel and perpendicular to the direction of moulding ASTM D-256.

Dimensional stability under heat: HDT annealed and non-annealed ASTM D-648.

6

TABLE 3

| Example | Material | Flexure test | | | Tensile strength at at break | Deflection at break | HDT annealed | Izod at 23°C | | Izod at −20°C | |
|---|---|---|---|---|---|---|---|---|---|---|---|
| | | E-modulus | Strength at 5% deflection | Maximum flexural strength | | | | parallel | perpen-dicular | parallel | perpen-dicular |
| | | N/mm² | N/mm² | N/mm² | N/mm² | % | °C | kJ/m² | kJ/m² | kJ/m² | kJ/m² |
| 1 | A | 2380±10 | 75.5±0.6 | 71.5±0.6 | | | 87.3 | 17.6± 1.2 | 3.0±0.8 | 8.9±0.4 | 2.5±1.4 |
| 2 | B | 1900±20 | 61.0±0.1 | 61.0±0.1 | | | 91.4 | 48.5± 1.9 | 27.7±2.6 | 34.3±0.9 | 25.5±2.6 |
| 3 | C | 2820±30 | 91.1±0.5 | 91.1±0.5 | | | 104.8 | 15.0± 0.5 | 9.2±0.3 | 9.0±0.4 | 5.4±1.5 |
| 4 | Poly-carbonate | 2540±20 | 97.9±0.8 | 104.8±0.3 | | | 135 | 60.4±10.0 | 50.3±8.2 | 9.8±0.4 | 9.3±0.3 |
| 5 | 1 | 2580±10 | | | 57.1±5.2 | 2.2±0.2 | 94.2 | 1.4± 0.5 | 1.4±0.7 | 1.5±0.4 | 1.5±0.4 |
| 6 | 2 | 2180±20 | | | 56.4±1.1 | 2.7±0.1 | 94.8 | 1.8± 0.1 | 1.3±0.3 | 1.9±0.2 | 1.5±0.4 |
| I | 3 | 2820±30 | 97.3±0.5 | 97.3±0.5 | | | 112.0 | 19.7± 1.8 | 5.6±0.9 | 6.1±0.9 | 3.7±0.6 |
| 7 | 4 | 2660±20 | | | 55.8±3.6 | 2.1±0.1 | 99.9 | 0.8± 0.1 | 0.6±0.2 | 0.8+0.1 | 0.7+0.2 |
| 8 | 5 | 2410+20 | | | 60.8±8.6 | 2.7±0.5 | 100.7 | 1.9± 0.6 | 1.3±0.6 | 1.5±0.3 | 1.2±0.5 |
| II | 6 | 2740±40 | 100.3±0.8 | 101.1±0.5 | | | 116.3 | 41.0± 4.0 | 29.6±1.7 | 8.1±1.1 | 7.7±1.0 |
| 9 | 7 | 2630±30 | 98.3±0.5 | 100.8±0.4 | | | 110.0 | 10.1± 0.5 | 7.6±1.5 | 7.0±1.5 | 4.8±0.5 |
| 10 | 8 | 2460±30 | | | 86.8±4.1 | 4.1±0.4 | 109.8 | 5.9± 0.8 | 5.3±0.7 | 5.5±0.8 | 1.5±0.2 |
| III | 9 | 2650±20 | 101.1±0.6 | 104.3±0.5 | | | 122.0 | 60.6± 6.1 | 54.5±2.5 | 14.4±1.2 | 4.0±0.4 |

TABLE 4

| Example | Material | Flexure test N/mm² | | | HDT °C | | Izod kJ/m² (parallel) | | (perpendicular) | | Glos ‰ |
| | | E-modulus | Strength at 5% deflection | Maximum flexural strength | Non-annealed | Annealed 2 hours 105°C | (inj. mldg.) +23°C | −20°C | (inj. mldg.) +23°C | −20°C | |
|---|---|---|---|---|---|---|---|---|---|---|---|
| IV | 10 | 2840±20 | 94.8±0.6 | 94.8±0.6 | 90 | 108 | 8.0± 1.7 | 3.0±1.2 | 14.8±0.8 | 7.9±0.8 | 46 |
| V | 11 | 2800±40 | 96.7±0.6 | 96.7±0.6 | 96 | 110 | 6.0± 1.7 | 2.8±0.4 | 21.1±3.5 | 6.5±1.1 | 49 |
| VI | 12 | 2810±20 | 99.0±0.4 | 99.5±0.4 | 96 | 113 | 11.6± 4.2 | 4.7±0.5 | 28.3±3.0 | 8.2±1.0 | 51 |
| VII | 13 | 2770±20 | 102.6±0.8 | 103.5±0.7 | 102 | 116 | 38.8± 1.5 | 10.9±2.6 | 43.6±1.6 | 12.7±2.7 | 52 |
| VIII | 14 | 2660±50 | 101.9±1.2 | 105.6±1.0 | 113 | 122 | 64.9±10.0 | 16.2±4.3 | 73.7±7.0 | 20.1±2.5 | 56 |

Of a number of materials injection-moulded sheets of 3.25 mm, with fusion seams were made; for the determination of IFFIEM*. The results are mentioned in Table 5.

TABLE 5

| Example | Material | Force (N) | Energy (Nm) |
|---|---|---|---|
| 15 | A | 2916±314 | 14.4 ±0.8 |
| 16 | B | 2766±197 | 12.5 ±0.8 |
| 17 | C | 3177± 92 | 15.5 ±0.8 |
| 18 | Polycarbonate | 4790± 35 | 24.9 ±0.4 |
| 19 | 1 | 701± 97 | 0.58±0.15 |
| 20 | 2 | 615± 86 | 0.71±0.33 |
| IX | 3 | 2986± 69 | 11.9 ±1.5 |
| 21 | 4 | 585± 55 | 0.43±0.11 |
| 22 | 5 | 708± 80 | 0.69±0.10 |
| X | 6 | 3179±174 | 15.7 ±0.0 |
| 23 | 7 | 1345±331 | 1.85±0.69 |
| 24 | 8 | 1105±171 | 1.20±0.30 |
| XI | 9 | 3497± 63 | 16.6 ±0.2 |

*IFFIEM=Instrumented flat-headed falling dart impact energy measurement.

Of a number of compounds the spiral flow length was determined using a flat spiral as described by Ebneth and Böhm in 'Plastverarbeiter' 19 (1968) pag. 261—269. The processing temperature of the material was 250 degrees celsius and the mould temperature was 80 degrees celsius.

TABLE 6

| Example | Material | Spiral flowlength (cm) |
|---|---|---|
| 25 | c | 48 |
| XII | 10 | 53 |
| XIII | 11 | 55 |
| XIV | 12 | 56 |
| XV | 13 | 52 |
| XVI | 14 | 40 |
| 26 | polycarbonate | 25 |

Two compounds were prepared having the following compositions (in parts by weight) and mechanical properties.

**0 051 336**

| Example | XVII | XVIII |
|---|---|---|
| Composition A | 10 | 5 |
| C | 40 | 25 |
| polycarbonate | 50 | 70 |
| Melt index | 6.9 | 4.0 |
| Notched izod 23°C | 457 | 600 |
| (j/m) −40°C | 290 | 320 |
| Vicat-temperature 5 kg (°C) | 125 | 135 |
| Ball-indentation hardness (mm) | 3.6 | 2.0 |

**Claims**

1. Polymer composition based on a polycarbonate and a graft copolymer of a vinylaromatic compound and an unsaturated nitrile compound on a rubbery polymer, characterized in that the polymer composition comprises:
   a. one or more polycarbonates, and
   b. a graft copolymer obtained by polymerizing, in a first emulsion polymerisation step, a mixture of 10—30% by weight of acrylonitrile, 10—75% by weight of styrene and 0—70% by weight of α-methylstyrene in the presence of a latex of a rubbery polymer and by polymerizing, in a second emulsion polymerization step, in the presence of the latex produced in the first step, a mixture of 10—30% by weight of acrylonitrile, 0—50% by weight of styrene and 40—90% by weight of α-methylstyrene.

2. Polymer composition according to claim 1, characterized in that the graft copolymer contains 10—40% by weight of rubber.

3. Polymer composition according to claim 1 or 2, characterized in that the composition consists of
   a. 5—95% by weight of polycarbonate, and
   b. 5—95% by weight of graft copolymer.

4. Polymer composition according to claim 3, characterized in that the polymer composition consists of
   a. 40—75% by weight of polycarbonate, and
   b. 25—60% by weight of graft copolymer.

5. Polymer composition according to any one of claims 1—4, characterized in that, at the same time, the polymer composition contains additionally a graft copolymer obtained by polymerizing 75—90 parts by weight of a mixture of 60—90% by weight of styrene and 10—40% by weight of acrylonitrile in the presence of 10—25 parts by weight of a rubbery polymer.

6. Polymer composition according to any one of claims 1—5, characterized in that a polycarbonate based on a non-halogenated dihydroxydiarylalkane is applied.

7. Object wholly or partly made from copolymer composition according to any one of claims 1—6.

**Patentansprüche**

1. Polymerzusammensetzung auf der Basis eines Polycarbonats und eines Pfropfcopolymers aus einer vinylaromatischen Verbindung und einer ungesättigten Nitrilverbindung auf einem kautschukartigen Polymer, dadurch gekennzeichnet, daß sie aus
   a) einem oder mehreren Polycarbonaten und
   b) einem Pfropfcopolymer, erhalten durch Polymerisation, in einer ersten Emulsionspolymerisationsstufe, eines Gemisches von 10 bis 30 Masse-% Acrylnitril, 10 bis 75 Masse-% Styrol und 0 bis 70 Masse-% α-Methylstyrol in Gegenwart eines Latex eines kautschukartigen Polymers, und Polymerisation, in einer zweiten Emulsionspolymerisationsstufe, in Gegenwart des in der ersten Stufe erzeugten Latex, eines Gemisches von 10 bis 30 Masse-% Acrylnitril, 0 bis 50 Masse-% Styrol und 40 bis 90 Masse-% α-Methylstyrol, besteht.

2. Polymerzusammensetzung nach Anspruch 1, dadurch gekennzeichnet, daß das Pfropfcopolymer 10 bis 40 Masse-% Kautschuk enthält.

3. Polymerzusammensetzung nach Anspruch 1 oder 2, dadurch gekennzeichnet, daß sie aus
   a) 5 bis 95 Masse-% Polycarbonat und
   b) 5 bis 95 Masse-% Pfropfcopolymer besteht.

4. Polymerzusammensetzung nach Anspruch 3, dadurch gekennzeichnet, daß sie aus
   a) 40 bis 75 Masse-% Polycarbonat und
   b) 25 bis 60 Masse-% Pfropfcopolymer besteht.

5. Polymerzusammensetzung nach einem der Ansprüche 1—4, dadurch gekennzeichnet, daß zugleich

10

die Polymerzusammensetzung zusätzlich ein Pfropfcopolymer, erhalten durch Polymerisation von 75 bis 90 Masse-Teilen eines Gemisches von 60 bis 90 Masse-% Styrol und 10 bis 40 Masse-% Acrylnitril in Gegenwart von 10 bis 25 Masse-Teilen eines kautschukartigen Polymers, enthält.

6. Polymerzusammensetzung nach einem der Ansprüche 1 bis 5, dadurch gekennzeichnet, daß ein Polycarbonat auf der Basis eines nichthalogenierten Dihydroxydiarylalkans eingesetzt wird.

7. Gegenstand hergestellt teilweise oder zur Gänze aus einer Copolymerzusammensetzung nach einem der Ansprüche 1 bis 6.

**Revendications**

1. Composition polymère à base d'un polycarbonate et d'un copolymère greffé d'un composé vinylaromatique et d'un composé de type nitrile insaturé sur un polymère caoutchouteux, caractérisée en ce que la composition polymère comprend:

a. un ou plusieurs polycarbonates, et

b. un copolymère greffé obtenu par polymérisation dans un premier stade polymérisation en émulsion, d'un mélange de 10—30% en poids d'acrylonitrile, 10—75% en poids de styrène et 0—70% en poids d'α-méthylstyrène en présence d'un latex d'un polymère caoutchouteux, et par polymérisation, dans un second stade de polymérisation en émulsion, en présence du latex produit dans le premier stade, d'un mélange de 10—30% en poids d'acrylonitrile, 0—50% en poids de styrène et 40—90% en poids d'α-méthylstyrène.

2. Composition polymère selon la revendication 1, caractérisée en ce que le copolymère greffé contient 10—40% en poids de caoutchouc.

3. Composition polymère selon la revendication 1 ou 2, caractérisée en ce que la composition est constituée de

a. 5—95% en poids de polycarbonate, et

b. 5—95% en poids de copolymère greffé.

4. Composition polymère selon la revendication 3, caractérisée en ce que la composition polymère est constituée de

a. 40—75% en poids de polycarbonate, et

b. 25—60% en poids de copolymère greffé.

5. Composition polymère selon l'une quelconque des revendications 1—4, caractérisée en ce qu'en même temps, la composition polymère contient de plus un copolymère greffé obtenu par polymérisation de 75—90 parties en poids d'un mélange de 60—90% en poids de styrène et 10—40% en poids d'acrylonitrile en présence de 10—25 parties en poids d'un polymère caoutchouteux.

6. Composition polymère selon l'une quelconque des revendications 1—5, caractérisée en ce qu'on emploie un polycarbonate à base d'un dihydroxydiarylalcane non halogéné.

7. Objet fait en totalité ou en partie d'une composition copolymère selon l'une quelconque des revendications 1—6.